Europäisches Patentamt

European Patent Office

Office européen des brevets

(11) Publication number: **0 477 438 A1**

## EUROPEAN PATENT APPLICATION

(21) Application number: **90202601.2**

(22) Date of filing: **28.09.90**

(51) Int. Cl.5: **F03D 1/02**

(43) Date of publication of application:
**01.04.92 Bulletin 92/14**

(84) Designated Contracting States:
**AT BE CH DE DK ES FR GB GR IT LI LU NL SE**

(71) Applicant: **Doleh, Zakaria Kalil**
**P.O. Box 1566**
**Dubai(AE)**

(72) Inventor: **Doleh, Zakaria Kalil**
**P.O. Box 1566**
**Dubai(AE)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **System for use of wind energy.**

(57) A system for use of wind energy is provided in which a larger number of wind turbines (6) are combined in one single housing (2) in order to have all the wind turbines controlled by one single control mechanism to position the housing in an optimal angular position.

FIG.1

EP 0 477 438 A1

For commercial use of wind energy, wind turbines, windmills and similar devices are used. In order to optimize the use of the wind energy it is necessary to adjust the angular position of the wind turbines in relation to the wind direction continuously. To this end control means are developed which continuously adjust the optimal angular position of the wind turbine being rotatable in a horizontal plane.

As well-known, wind turbines are positioned on a vertical mast and are rotatable in relation thereto in a horizontal plane. The rotation means and the control mechanism are relatively expensive and constitute a major part of the costs of a wind turbine installation.

The invention has as its object to improve this and to lower the production cost of a wind turbine installation.

This is achieved according to the invention by making use of a system for use of wind energy comprising a substantially vertical mast, a housing having opposite open walls and rotatable with respect to the mast in a horizontal plane, a number of wind turbines arranged in the housing, control means for adjusting the housing in an optimal angular position with respect to the wind direction and means coupled to the rotating shafts of the turbine for using rotational energy.

According to the invention it is possible to have for each vertically positioned mast and accompanying rotation means and control means a larger number of wind turbines resulting in lower costs for each wind turbine.

An electrical generator can be provided for using the rotational enery. It is possible to couple a generator with each turbine shaft or to couple the turbine shafts with one single generator.

It is possible to make use of one single housing being separated in compartments by partition walls. In each of said compartments a wind turbine can be arranged.

At the housing or in the housing sound damping means can be provided. As the sound damping means are being used for all employed wind turbines, the costs for each wind turbine are further decreased.

It is possible, for example, to arrange six turbines according to a triangle configuration in the housing.

The invention is elucidated with the help of the drawings.

Fig. 1 shows in isometric view a system according to the invention, and

Fig. 2 shows in isometric view a detail of the wind turbines in the system according to fig. 1.

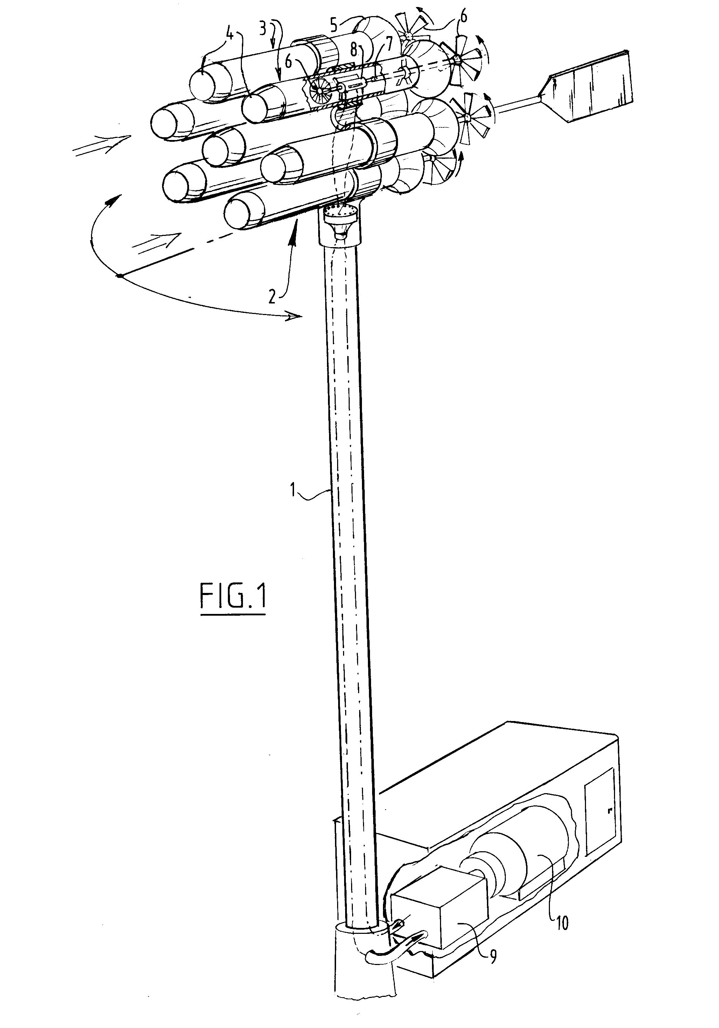

According to fig. 1 a substantial vertical mast 1 is provided on top of which a housing 2 is arranged, which is rotatable with respect to the mast 1 in a horizontal plane. Means are provided for controlling the angular position of the housing in order to adjust it optimally to the wind direction. The housing is by means of partition walls divided in a number of elongated members for example 3. At both ends of the elongated members baffles 4, 5 respectively are provided. Inside each of the members 3 a wind turbine for example 6 is provided having a rotational axis 7 each of the air turbines is coupled with a hydraulic motor 8. The hydraulic power is transferred to the hydraulic motor 9 in which an electric generator 10 is provided. In and around the housing 2 sound damping material can be provided.

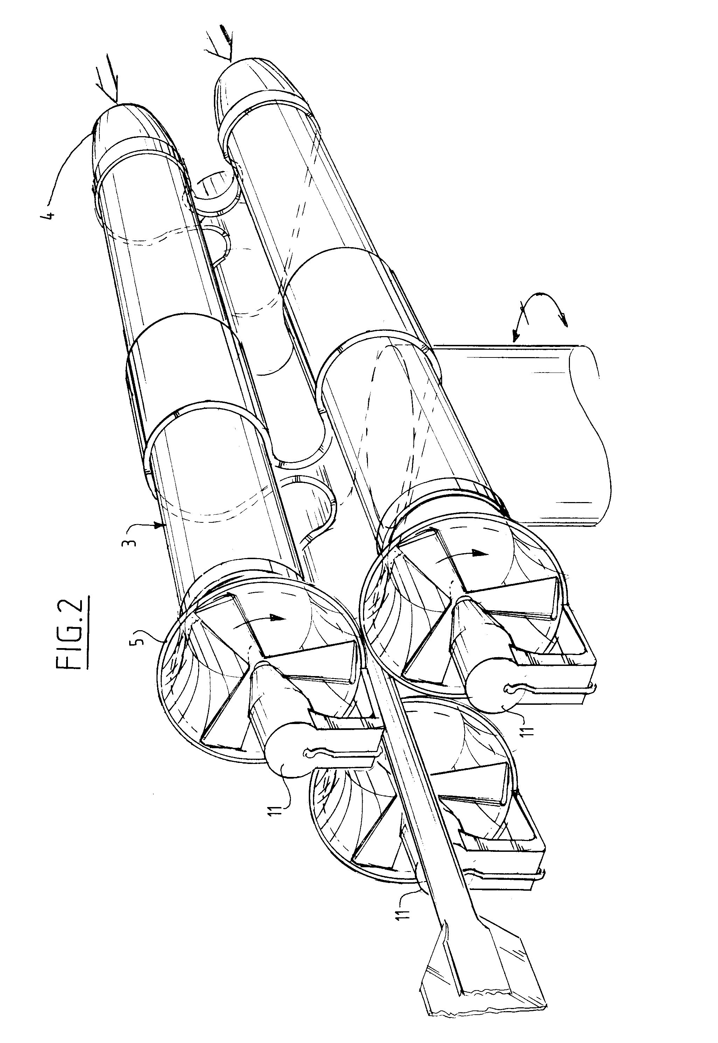

As shown in figure 2 each turbine shaft can be coupled to an electric generator 11.

## Claims

1. System for use of wind energy comprising a substantially vertical mast, a housing having opposite open walls and rotatable with respect to the mast in a horizontal plane, a number of wind turbines arranged in the housing, control means for adjusting the housing in an optimal angular position with respect to the wind direction and means coupled to the rotating shafts of the turbine for using rotational energy.

2. System according to claim 1, characterized in that the means for using rotational energy is formed by an electric generator.

3. System according to claim 2, characterized in that for each turbine shaft a generator is provided coupled to said shaft.

4. System according to claim 2, characterized in that the turbine axes are coupled to one single generator.

5. System according to claims 1-4, characterized in that the housing is separated by partition walls into compartments and in that in each compartment a wind turbine is arranged.

6. System according to claims 1-5, characterized in that the housing is provided with sound damping means.

7. System according to claims 1-6, characterized in that in the housing six turbines are provided according to a triangle configuration.

FIG.1

FIG.2

European
Patent Office

EUROPEAN SEARCH
REPORT

Application Number

EP 90 20 2601

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 317 522  (ECKEL)<br>* Page 14, line 25 - page 15, line 9; page 15, line 33 - page 17, line 17; page 19, line 29 - page 20, line 9 * | 1 | F 03 D 1/02 |
| A | | 2,3,4,5,6,7 | |
| | – – – | | |
| A | FR-A-2 504 603  (MEISEI UNIVERSITY)<br>* Page 8, lines 14-34; page 10, lines 30-37 * | 1,2,3,5,6 | |
| | – – – – – | | |

TECHNICAL FIELDS
SEARCHED (Int. Cl.5)

F 03 D

The present search report has been drawn up for all claims

| Place of search | Date of completion of search | Examiner |
|---|---|---|
| The Hague | 22 May 91 | DE WINTER P.E.F. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

  & : member of the same patent family, corresponding
document